# EUROPÄISCHE PATENTSCHRIFT

(11) **EP 2 788 175 B1**
(45) Veröffentlichungstag und Bekanntmachung des Hinweises auf die Patenterteilung: **23.01.2019**
(21) Anmeldenummer: 12797861.7
(22) Anmeldetag: 03.12.2012
(51) Int. Cl.: B29C 70/34, B60B 5/02, B29L 31/32

(54) **FELGENBETT MIT INTEGRIERTEM FLANSCH AUS FASERVERBUNDWERKSTOFFEN SOWIE EIN VERFAHREN ZU DESSEN HERSTELLUNG**
FIBER COMPOSITE RIM BASE COMPRISING AN INTEGRATED FLANGE, AND METHOD FOR THE PRODUCTION THEREOF
CREUX DE JANTE À COLLET INTÉGRÉ EN MATÉRIAUX COMPOSITES RENFORCÉS PAR FIBRES ET PROCÉDÉ DE FABRICATION DE CELUI-CI

(30) Priorität: 07.12.2011 DE 102011087921
(43) Veröffentlichungstag der Anmeldung: 15.10.2014
(73) Patentinhaber: ThyssenKrupp Carbon Components GmbH, 01723 Kesselsdorf (DE)
(72) Erfinder: WERNER, Jens, 01640 Coswig (DE); KÖHLER, Christian, 01099 Dresden (DE); BARTSCH, André, 01307 Dresden (DE); MÄKE, Sandro, 01796 Dohma (DE); DREßLER, Michael, 01307 Dresden (DE); LEPPER, Martin, 01279 Dresden (DE); HUFENBACH, Werner, 01324 Dresden (DE)
(74) Vertreter: Kailuweit & Uhlemann Patentanwälte Partnerschaft mbB
(86) Internationale Anmeldenummer: PCT/EP2012/074187
(87) Internationale Veröffentlichungsnummer: WO 2013/083502

(56) Entgegenhaltungen:
- EP-A1- 2 363 273
- WO-A1-2009/036736
- DE-A1-102005 041 940
- JP-A- 59 032 504
- US-A- 3 917 352

## Beschreibung

Die Verwendung von Leichtbaumaterialien im Fahrzeugbau, besonders in der Ersatz- und Tuningteil - Herstellung, ist aus dem Stand der Technik bekannt. Besonders die Verwendung von Leichtmetallen wie Aluminium und Magnesium für Karosserie- und Kleinteile hat sich mittlerweile auch in der Serienproduktion durchgesetzt. Zusätzlich gewinnen Faserverbundwerkstoffe, aufgrund Ihres hervorragenden Verhältnisses von Gewicht und mechanischen Eigenschaften, zunehmend an Bedeutung. Bislang werden diese Verbundwerkstoffe allerdings vorrangig im Karosseriebau eingesetzt, da die Herstellung belastungsangepasster Bauteile, bspw. Felgen, aus Faserverbundkunststoff aufwendig und noch immer Gegenstand aktueller Forschungen ist.

Die Verwendung von Faserverbundwerkstoffen für Fahrzeugräder bzw. -feigen führt zu deutlichen Verbesserungen hinsichtlich der Beschleunigung und des Fahrverhalten eines Fahrzeuges. Die Reduktion der trägen und ungefederten Masse der Räder hat gleichzeitig eine bessere Straßenlage des Fahrzeugs sowie eine starke Reduktion von Lagerkräften zur Folge und kann so bspw. eine höhere Lebensdauer von Stoßdämpfern, Radaufhängung und Domlagern bewirken.

Aus dem Stand der Technik sind bereits Leichtbau-Fahrzeugräder, die ganz oder zumindest teilweise aus Faserverbundwerkstoff bestehen, bekannt.

Die DE 41 23 459 C1 offenbart ein Fahrzeugrad, bestehend aus einer Kunststofffelge und einer zumindest teilweise aus Metall bestehenden Radscheibe, mit dem gegenüber konventionellen Stahlfelgen eine erhebliche Gewichtsreduzierung und gleichzeitig eine hinreichende Wärmeleitfähigkeit des Rades erreicht werden können. Die Innenseite der Felge, die aus einem hochfesten Kunststoff mit relativ hoher Wärmeleitfähigkeit besteht, ist dabei zwischen Hump- und Tiefbett als formidealer Gegenpart zur Radscheibe konstruiert, so dass diese weitgehend formschlüssig aneinander anliegen. Zusätzlich kann auf der dem Reifen abgewandten Seite des Tiefbetts ein nach innen gerichteter, durchgehender oder unterbrochener Rand zum Verschrauben der Radscheibe angebracht sein. Gemäß dieser Druckschrift ist zusätzlich eine weitere form- oder stoffschlüssige Verbindung zwischen Felge und Radscheibe vorgesehen. Zur Begünstigung eines Stoffschlusses ist insbesondere die Ausbildung von Radscheibe und Felge aus einem Metall-Kunststoff-Verbund bevorzugt. Die Verwendung von Faserverbundwerkstoffen wird in dieser Schrift nicht offenbart.

In der DE 20 2005 004 399 U1 wird ein Fahrzeugrad, bestehend aus einer Felge aus faserverstärktem Kunststoff und einer Radschüssel aus Metall, beschrieben. Dabei sind die Radschüssel oder Speichen oder andere Verbindungselemente mittig mit der Felge verbunden, wobei diese durch die Felge hindurch geführt werden. Diese Lösung sei gegenüber einer Befestigung der Radschüssel an einem an der Innenseite befindlichen Rand wie in der DE 41 23 459 C1 vorteilhaft. Insbesondere gelte dies für die Reifen von Krafträdern, da durch die mittige Befestigung angeblich einseitige, die Felge mechanisch stark belastende Spannungen vermieden werden. Zudem werde so das Problem umgangen, dass sich gemäß dem zitierten Stand der Technik keine Felge mit innen befindlichem, gleichmäßig faserverstärkten Rand herstellen lasse.

Mit der DE 10 2010 010 513 A1 und der DE 10 2010 010 512 A1 werden Verfahren zur Herstellung von hohlprofilartigen Bauteilen, insbesondere Radfelgen, aus Faserverbundwerkstoffen durch flechttechnische Ablage von Fasern auf einem, die Bauteilkontur abbildenden Formwerkzeug und der anschließenden Konsolidierung dieses Vorformlings mit Matrixwerkstoff beschrieben. Weiterhin wird offenbart, wie ein zweites Bauteil, insbesondere eine Radscheibe bzw. -schüssel oder ein Radkreuz, während der Faserablage formschlüssig in den Vorformling integriert werden kann, um bei der anschließenden Konsolidierung durch Stoffschluss eine feste Verbindung mit diesem einzugehen. Dadurch ist zwar eine hochfeste Verbindung von Radschüssel und Felge gewährleistet, die jedoch auf einer unlösbaren Verbindung der beiden Bauteile basiert und somit einen modularen Aufbau von Fahrzeugrädern durch Kombination verschiedener Radscheiben und Felgen unmöglich macht.

Die WO 2009/036736 A1 offenbart eine Radfelge aus textilem Schlauch, wobei eine Radnabe bzw. -scheibe durch beiderseitige Hinterschneidungen mindestens einer Schlauchlage formschlüssig mit der Felge verbunden wird. Der textile Schlauch wird erfindungsgemäß umgeschlagen und bildet somit wenigstens zwei Schlauchlagen, von denen nur eine für die Hinterschneidungen genutzt wird. Die radial äußere Schlauchlage konstituiert dabei das Felgenbett und trägt nicht zu den Hinterschneidungen bei. Die erfindungsgemäße Felge ist unlösbar mit einer Radnabe, Radscheibe bzw. einem Radstern verbunden und ermöglicht somit keinen modularen Aufbau von Rädern.

In der US 3,917,352 wird ein Fahrzeugrad aus faserverstärktem Kunststoffrad sowie ein Verfahren zu dessen Herstellung beschrieben. Das Rad ist dabei einteilig aufgebaut und umfasst sowohl Felgenbett als auch Radscheibe. Die Herstellung des Rades erfolgt durch Wicklung eines Gewebeschlauches um die zwei Hälften eines Formwerkzeugs, wobei durch Überwicklung einer Nut die Radscheibe ausgebildet werden kann. Die Faserablage beim Wickeln erfolgt jedoch nicht ausreichend formschlüssig, daher muss der Gewebeschlauch zusätzlich mit Gewebeband oder Filamenten umwickelt werden. Aufgrund der Beschränktheit des Herstellungsverfahrens auf einteilige Felgen, ist ein modularer Aufbau von Fahrzeugrädern nicht möglich.

In der DE 42 23 290 B4 wird ein Verbund-Kunstharzrad offenbart, das aus mehreren Teilgussstücken besteht. Die Teilgussstücke weisen an ihren Verbindungsflächen korrespondierende Gewinde auf, so dass sie mittels Verschraubung zusammengefügt werden können. Diese, vom Industriestandard abweichende, Art der Fügung erfordert die Anlage der Gewinde schon bei der Herstellung der Teilgussstücke und schränkt deren Verwendbarkeit somit stark ein. Die Herstellung von Teilstücken mit derartigen Gewinden ist zudem nicht ohne weiteres ohne Guss- oder Spritzgießverfahren möglich.

Dokument JP59032504 enthält die Abbildungen eines Felgenbetts mit einem angeformten Flansch. In diesem Dokument besteht die innere, den Flansch konstituierende Lage des Felgenbetts, aus laminierten Faserband oder Tape und ist von einer zweiten Lage aus Langfasern umwickelt.

Leichtbauräder aus Faserverbundwerkstoffen sind bislang eher Nischenprodukte und wegen der geringen Stückzahl und den hohen Fertigungskosten für den Normalverbraucher oft unerschwinglich. Dies liegt insbesondere daran, dass zur Herstellung von Felgen aus Faserverbundwerkstoffen nicht nur Fachkenntnisse, sondern auch spezielle Maschinen und Technologien nötig sind, die erst langsam Einzug in die Serienproduktion finden. Die Einführung dieser Technologie in den Massenmarkt könnte jedoch durch modulare Systeme, die den verschiedenen Herstellern den Rückgriff auf eine Auswahl von Grundelementen und deren Individualisierung ermöglichen, wesentlich erleichtert werden.

Die Aufgabe der vorliegenden Erfindung ist es, die Nachteile des Standes der Technik zu überwinden und ein Felgenbett mit integriertem Flansch aus Faserverbundwerkstoff für die feste Verbindung mit einer Radscheibe oder einem Radstern, sowie ein Verfahren zu dessen Herstellung, bereitzustellen. Dieses Felgenbett soll als Grundelement durch die Montage einer optisch ansprechenden Radscheibe am integrierten Flansch beliebig individualisierbar sein. Dabei soll das Felgenbett durch die Befestigung der Radscheibe an dem integrierten Flansch zu einem voll belastbaren Fahrzeugrad, insbesondere mit Straßenzulassung, ergänzt werden können.

Die erfindungsgemäße Aufgabe wird gelöst durch die Merkmale des Hauptanspruchs sowie des nebengeordneten Verfahrensanspruchs 13. Bevorzugte Ausgestaltungen der Erfindungen finden sich in den rückbezogenen Unteransprüchen.

Das erfindungsgemäße Felgenbett besteht vollständig aus Faserverbundwerkstoff und weist an der der Innenseite bzw. der vom Reifen abgewandten Seite des Felgenbetts einen Flansch zur Befestigung eines Radsterns bzw. einer Radscheibe auf. Das Felgenbett wird beidseitig von Felgenhörnern begrenzt und weist zwischen den Felgenhörnern ein Felgentiefbett auf, in dessen Bereich das Felgenbett den kleinsten Umfang aufweist. Das Felgenbett kann weitere Ausgestaltungen, bspw. Hump oder Felgenschulter, aufweisen, die für die vorliegende Erfindung jedoch von untergeordneter Bedeutung sind. Erfindungsgemäß kann der Flansch im gesamten Bereich des Felgenbetts angeordnet sein, bevorzugt ist der Flansch im Felgentiefbett angeordnet.

Felgenbett und Flansch sind, bevorzugt einteilig, aus Faserverbundwerkstoff gebildet. Der Faserverbundwerkstoff besteht bevorzug aus Verstärkungsfasern, die in einem duro- oder thermoplastischen Matrixwerkstoff eingebettet sind. Einteilig bedeutet dabei, dass Felgenbett und Flansch zumindest teilweise aus gemeinsamen Verstärkungsfasern gebildet sind. Durch das Vorliegen von gemeinsamen Verstärkungsfasern in Felgenbett und Flansch werden Kräfte, insbesondere Zugkräfte, zwischen Felgenbett und Flansch hervorragend übertragen. Als Verstärkungsfasern werden bevorzugt Kohlenstoff-, Glasfaser- oder Aramidfasern verwendet. Die Verstärkungsfasern sind dabei in Faserlagen schichtförmig im Felgenbett und Flansch angeordnet. Je nach Herstellungsverfahren können die Faserlagen dabei aus Geflecht, Gewebe, Gestrick oder Gelege bestehen. Besonders bevorzugt sind die Faserlagen aus, geflochtenen oder gewickelten, Endlosfasern aufgebaut. Die aus Endlosfasern gebildeten Faserlagen gehen an Umkehrpunkten ineinander über, an denen eine Richtungsumkehr der Faserlagen stattfindet. Die Umkehrpunkte befinden sich bevorzugt an der Peripherie des Felgenbetts in axialer Richtung, insbesondere an den Felgenhörnern. Das derart mehrschichtig aus Faserlagen aufgebaute Felgenbett weist mindestens eine Faserlage mit nach innen gerichteter Ausstülpung auf. Diese Ausstülpungen bilden in konsolidierter Form den zur Befestigung der Radscheibe dienenden Flansch. Die Faserlagen laufen dabei erfindungsgemäß ohne Unterbrechung aus dem Felgenbett in den Flansch ein. Durch den Aufbau von Flansch und Felgenbett aus gemeinsamen Faserlagen bzw. Fasern entsteht so ein Felgenbett mit hochfest integriertem Flansch, wobei die, auf den Flansch wirkende Kräfte und Momente optimal auf das Felgenbett übertragen werden.

Bevorzugt laufen die Faserlagen in den Flansch ein und wieder aus und weisen an dessen unterem Ende einen Umkehrpunkt auf. An diesem findet eine Richtungsumkehr der Faserlage, insbesondere der Fasern in der Faserlage, statt. Durch den ununterbrochenen Verlauf der Faserlagen erhält der Flansch, insbesondere an seinem unteren Ende, eine höhere Stabilität im Vergleich zu einer mehrlagigen Sandwichkonstruktion. Besonders bevorzugt sind die Faserlagen weiterhin aus Endlosfasern gebildet, womit am unteren Ende des Flansches die Endlosfasern einen Umkehrpunkt aufweisen. An diesem gehen jedoch keine Faserlagen ineinander über, vielmehr findet die Richtungsumkehr einer Faserlage statt.

Besonders bevorzugt durchziehen die Faserlagen das gesamte Felgenbett sowie den Flansch unterbrechungsfrei. Somit durchzieht eine Faserlage ausgehend von einem Felgenhorn in Richtung Felgenmitte das gesamte Felgenbett, läuft insbesondere unterbrechungsfrei in den Flansch ein und wieder aus und weiter bis zum anderen Felgenhorn. Aus Endlosfasern gebildete Faserlagen gehen weiterhin an Umkehrpunkten ineinander über, die sich an der Peripherie des Felgenbetts, insbesondere an den axial äußersten Punkten des Felgenbetts, den Felgenhörnern, befinden. Somit durchzieht eine Faserlage ausgehend von einem Felgenhorn in Richtung Felgenmitte das gesamte Felgenbett, läuft unterbrechungsfrei in den Flansch ein und wieder aus und weiter bis zum anderen Felgenhorn. Dort weist die Faserlage einen Umkehrpunkt auf, an der sie in eine, in der Regel radial darüber abgelegte, Faserlage übergeht. Diese läuft nun in entgegengesetzter Richtung hin zur Felgenmitte, läuft ohne Unterbrechung in den Flansch ein und wieder aus und weiter hin zum ersten Felgenhorn.

Weiterhin bevorzugt durchzieht ein Teil der Faserlagen das Felgenbett nur teilweise. Das heißt das mindestens eine Faserlage das Felgenbett, insbesondere in axialer Richtung, nicht vollständig bedeckt. Solch eine Faserlage durchzieht ausgehend von einem Punkt zwischen den beiden Felgenhörnern in Richtung Felgenmitte einen Teil des Felgenbetts. Dabei läuft die Faserlage zumindest unterbrechungsfrei in den Flansch ein, bevorzugt unterbrechungsfrei in den Flansch ein und wieder aus. Läuft die Faserlage in den Flansch ein und wieder aus durchzieht sie, ausgehend von einem beliebigen Punkt auf einer Seite des Flansches, in Richtung des Flansches einen Teil des Felgenbetts, läuft unterbrechungsfrei in den Flansch ein und wieder aus, bis hin zu einem anderem beliebigen Punkt auf der anderen Seite des Flansches. Aus Endlosfasern gebildete Faserlagen, die an Umkehrpunkten ineinander übergehen, weisen dann zusätzliche Umkehrpunkte im Bereich des Felgenbetts auf. Die Positionierung der Umkehrpunkte dieser Faserlagen erfolgt dabei in erwartungsgemäß besonders belasteten Bereichen des Felgenbetts, insbesondere im Bereich nahe dem Flansch. Durch die Positionierung der Umkehrpunkte der Faserlagen innerhalb des Felgenbetts und nicht ausschließlich im Bereich der Felgenhörner können bestimmte, in axialer Richtung ausgedehnte Bereiche des Felgenbetts mit mehr aus Endlosfasern gebildeten Faserlagen belegt werden, als die Gesamtheit des Felgenbetts. Dies oder das bereichsweise Belegen von Teilen des Felgenbetts mit nicht aus Endlosfasern gebildeten Faserlagen führt zu einer vergleichsweise höheren Schichtdicke des Fasermaterials in diesen Bereichen. Durch die anschließende Ablage von Faserlagen mit Umkehrpunkten im Bereich der Felgenhörner auf dem gesamten Felgenbett werden alle Faserlagen in einen festen Schichtverbund integriert.

Im erfindungsgemäßen Felgenbett sind die nach innen gerichteten Ausstülpungen der Faserlagen so angeordnet, dass der daraus gebildete Flansch umlaufend oder unterbrochen in Form einzelner Kreissegmente an der Innenseite des Felgenbetts vorliegt. Im Fall einzelner Kreissegmente können diese unterschiedlich ausgeformt sein und insbesondere eine unterschiedliche Ausdehnung in radialer Richtung aufweisen, um so bspw. die Anbringung von Radsternen mit unterschiedlich langen Hohlspeichen zu ermöglichen. Auch bei einem durchgehenden Flansch ist die Variation von Kontur und Höhe des Flansches entlang dessen Umfang bevorzugt.

Die aus in den Flansch einlaufenden, bevorzugt ein- und auslaufenden, Fasern gebildeten Faserlagen sind die flanschbildenden Faserlagen des erfindungsgemäßen Felgenbetts. Das erfindungsgemäße Felgenbett weist bevorzugt mindestens eine Faserlage, bevorzugt mindestens zwei und weiterhin bevorzugt mindestens drei Faserlagen auf. Bei den flanschbildenden Faserlagen handelt es sich bevorzugt um eine gewisse Anzahl aufeinander folgender, radial innenliegender Faserlagen, einschließlich der radial innersten. Je größer die Anzahl der flanschbildenden Faserlagen, desto größer die Festigkeit des daraus gebildeten Flansches und desto besser die Krafteinleitung in das restliche Felgenbett.

Das erfindungsgemäße Felgenbett weist zusätzlich eine Schicht von felgenbettbildenden Faserlagen auf, die ausschließlich im Bereich des Felgenbetts aufgebracht sind und keine Ausstülpungen aufweisen. Diese Schichten überdecken bzw. überspannen vorteilhaft die Ausstülpungen der flanschbildenden Faserlagen und sorgen so für eine ununterbrochene Kraftübertragung im Bereich des Felgenbetts. Bei den felgenbettbildenden Faserlagen handelt es sich bevorzugt um eine gewisse Anzahl aufeinander folgender, radial außenliegender Faserlagen, einschließlich der radial äußersten.

Die felgenbettbildenden Faserlagen sind, genau wie die flanschbildenden Faserlagen außerhalb der Ausstülpungen, abschnittsweise bevorzugt mit annähernd konstantem Abstand zur Rotationssymmetrieachse orientiert, abgesehen von den Bereichen der Felgenhörner, Hump oder Felgenschultern. Diese Orientierung ermöglicht vorteilhaft die Ausbildung eines hochfesten faserverstärkten Felgenbetts. Innerhalb der nach innen gerichteten Ausstülpungen sind die flanschbildenden Faserlagen besonders bevorzugt in annähernd radialer Richtung des Felgenbetts orientiert. Dadurch wird eine optimale Krafteinleitung der von der Radnabe über Radscheibe in den Flansch übertragenen Kräfte ermöglicht. Dementsprechend findet ein Übergang der Orientierung der flanschbildenden Faserlagen beim Einlaufen in den Flanschbereich statt. Dies gewährleistet gleichzeitig die hochfeste Anbindung des Flansches an das Felgenbett sowie eine optimale Krafteinleitung der auf den Flansch übertragenen Kräfte in das Felgenbett und umgekehrt.

Was die Orientierung der Fasern innerhalb der einzelnen Faserlagen betrifft, so kann diese zwischen verschiedenen Faserlagen variieren. Bevorzugt weisen die Fasern in den felgenbettbildenden Faserlagen einen anderen Winkel in Bezug auf die axiale Richtung des Felgenbetts auf, als die Fasern der flanschbildenden Schicht. Dabei ist die Ausrichtung der Fasern der felgenbettbildenden Faserlagen vor allem durch die angestrebten mechanischen Eigenschaften des Felgenbetts bestimmt. Die Ausrichtung der Fasern der flanschbildenden Faserlagen dient der Bereitstellung eines hochfesten Flanschs mit einer optimalen Kraftübertragung zum Felgenbett.

Weiterhin bevorzugt erfolgt die Anpassung des Faserverlaufs in den einzelnen Schichten des erfindungsgemäßen Felgenbetts entsprechend den zu erwartenden mechanischen Belastungen. Die Anpassung erfolgt dabei vorrangig durch Einstellung der Faserorientierung, durch Anpassung der Schichtdicke sowie gegebenenfalls durch Einbringen zusätzlicher textiler Einleger zwischen den Faserlagen an erwartungsgemäß besonders belasteten Stellen.

Die Fasern der flanschbildenden Faserlagen weisen einen Faserwinkel von ± 3° bis ± 87°, bevorzugt ± 15° bis ± 65° und weiterhin bevorzugt ± 20 bis ± 60° bezogen auf die axiale Richtung des Felgenbetts auf. Bei der Verwendung von textilen Halbzeugen können die Fasern auch Winkel von ± 0 bis ± 90°, bevorzugt ± 3 bis ± 87° betragen. Dabei sind insbesondere die höheren Faserwinkel zu bevorzugen, da aus derart orientierten Fasern bestehende Faserlagen ohne weiteres einen beliebig geformten Flansch ausbilden könnten. Bei zu hohen Faserwinkeln kann jedoch nachteilig eine ungleichmäßige Faserverteilung im Bereich des Flansches, insbesondere im Ein- und Auslaufbereich der Fasern vorliegen.

Die Fasern der felgenbettbildenden Faserlagen weisen einen Faserwinkel von ± 3° bis ± 87°, bevorzugt ± 20° bis ± 75° und weiterhin bevorzugt ± 30° bis ± 70° bezogen auf die axiale Richtung des Felgenbetts auf. Bei der Verwendung von textilen Halbzeugen können die Fasern auch Winkel von ± 0 bis ± 90°, bevorzugt ± 3 bis ± 87° betragen. Die Übertragung von Drehmomenten von der Nabe auf die Reifen beansprucht die Felgen weniger als Scher- und Biegebelastungen bei Kurvenfahrten oder Impact-Belastungen bei Schlaglöchern oder stoßartigen Belastungen, wie beim Aufprall der Felge gegen eine Bordsteinkante. Diese impulsartigen Belastungen können durch eine Faserausrichtung nahezu parallel zur axialen Richtung des Felgenbetts besonders gut übertragen und zur Nabe bzw. Radaufhängung abgeleitet werden. Die erfindungsgemäß bevorzugte Ausrichtung der Fasern innerhalb der felgenbettbildenden Faserlagen ist daher ein Kompromiss hinsichtlich der Vielfältigkeit der auf ein Fahrzeugrad einwirkenden Belastungen. Eine noch bessere Stabilität der Felge wird bevorzugt dadurch erreicht, dass die Fasern von verschiedenen Faserlagen voneinander abweichende Orientierungen aufweisen.

Weiterhin bevorzugt weist der Flansch Einleger in den nach innen gerichteten Ausstülpungen der Faserlagen auf. Diese Einleger liegen ebenfalls als gebrochener Kreisring, das heißt nahezu durchgehend mit einer oder mehreren Unterbrechungen, oder als einzelne Kreisringsegmente vor. Somit kann vorteilhaft eine mechanische Verstärkung des gesamten Flansches oder einzelner Bereiche wie z.B. an den späteren Anbringungspunkten des Radsterns, realisiert werden. Die Einleger weisen bevorzugt Gewindehülsen oder -buchsen auf, die der späteren Befestigung der Radscheibe bzw. des Radsterns, bspw. durch Verschraubung dienen. Dabei kann die Befestigung besonders vorteilhaft durch Versenkung der Befestigungsmittel in den Einleger erfolgen, so dass diese nicht beidseitig aus dem Flansch vorstehen. Somit kann die Befestigung der Radscheibe oder des Radsterns vorteilhaft ohne nach außen hin sichtbare Befestigungsmittel erfolgen. Bevorzugt bestehen die Einleger aus Kunststoff, Schaumstoff, konsolidiertem Faserverbundwerkstoff, Matrixmaterial oder metallischen Werkstoffen.

Der Flansch weist bevorzugt eine rechteckige Querschnittgeometrie mit geraden Flanken oder eine U- oder V-förmige Geometrie mit schrägen Flanken auf. Die Flanken können dabei sowohl eine im Wesentlichen radiale Ausrichtung als auch eine davon abweichende Ausrichtung aufweisen, bspw. leicht nach innen oder außen geneigt sein. Prinzipiell ist eine Vielzahl von Querschnittgeometrien denkbar, wobei die Flanke bevorzugt als formideales Gegenstück zu an Radscheibe bzw. Radstern befindlichen Anbringungselementen ausgeformt ist. Die Kanten des Flansches sind bevorzugt abgerundet ausgeformt um die mechanischen Eigenschaften des Felgenbetts, insbesondere hinsichtlich der Kerbwirkung, zu verbessern und um die Verletzungsgefahr durch scharfe Kanten zu minimieren. In einer weiterhin bevorzugten Ausgestaltung variiert die Querschnittgeometrie des Flansches entlang dessen Umfangs, um so bspw. an die verschieden ausgeformten Anbringungselemente einzelner Hohlspeichen angepasst zu sein.

Weiterhin Gegenstand der Erfindung ist ein Verfahren zur Herstellung eines Felgenbetts mit integriertem Flansch aus Faserverbundkunststoff.

Erfindungsgemäß kommt dabei ein, der Kontur des herzustellenden Felgenbetts entsprechendes Formwerkzeug zum Einsatz, das mit einer umlaufenden oder segmentierten radialen Nut versehen ist. Auf diesem Formwerkzeug erfolgt die Ablage von Fasermaterial derart, dass die Fasern formschlüssig auf dem Formwerkzeug abgelegt werden und die Fasern mindestens einer Faserlage ohne Unterbrechung in die Nut einlaufen. Somit wird eine Preform des Felgenbetts geformt, die mindestens eine Faserlage mit nach innen gerichteten Ausstülpungen aufweist. Besonders bevorzugt werden die Fasern so formschlüssig auf dem Formwerkzeug abgelegt, dass die Fasern mindestens einer Faserlage ohne Unterbrechung in die Nut ein- und wieder auslaufen. Durch anschließende Konsolidierung der Preform durch Infiltration eines Matrixwerkstoffs und Verpressen in einem geeigneten Außenwerkzeug wird das erfindungsgemäße Felgenbett erzeugt. Dabei wird durch die Konsolidierung der Ausstülpung mindestens einer Faserlage der erfindungsgemäße, hochfest direkt an das Felgenbett angebundene Flansch gebildet.

Die Ablage des Fasermaterials auf dem Formwerkzeug erfolgt beim erfindungsgemäßen Verfahren mittels Drapierung von Multiaxialgelegen, Gelegezuschnitten oder Gewebelagen auf dem Formwerkzeug, durch Umwickeln des Formwerkzeugs mit Bandgeflecht oder flachgedrücktem Rundgeflecht und/oder durch Umflechten des Formwerkzeugs mit Flechtfäden.

Besonders bevorzugt ist die Ablage des Fasermaterials, bzw. die Herstellung der Preform, durch Umflechten des Formwerkzeuges mit Hilfe einer Radialumflechtmaschine. Dabei wird das Formwerkzeug als Flechtkern durch mehrmaliges Vor- und Zurückbewegen durch die koaxiale Flechtmaschine mit der gewünschten Anzahl aus Endlosfasern bestehender Faserlagen bedeckt. Dabei wird die Fadenspannung der geflochtenen Fasern so angepasst, dass diese formschlüssig auf dem Formwerkzeug abgelegt werden. Weiterhin sind die Einstellung der Flechtfadenwinkel sowie die Einbindung von in axialer Richtung verlaufenden Stehfäden möglich. Dadurch, sowie durch gezielte Einstellung der Umkehrpunkte der Vor- und Zurückbewegung, können gezielt Preformen mit lokal variierenden Eigenschaften, insbesondere Faserorientierung und Geflechtdicke, erzeugt werden. Aus diesen Preformen können durch Konsolidierung Felgenbetten mit an die zu erwartenden mechanischen oder thermischen Belastungen angepasstem Faserverlauf erzeugt werden.

Beim Umflechten bzw. Umwickeln des Formwerkzeugs wird die Fadenspannung so eingestellt, dass die Endlosfasern des Fasermaterials mindestens einer Faserlage bei der Überflechtung der Nut in diese ohne Unterbrechung ein- und wieder auslaufen. Dadurch wird auf dem Formwerkzeug ein Flechtkörper abgelegt, der mindestens eine Faserlage mit nach innen in die Nut gerichteter Ausstülpung aufweist. Die Einstellung der Fadenspannung erlaubt dabei die Steuerung des Flankenwinkels dieser Ausstülpung, wobei eine höhere Fadenspannung, in Abhängigkeit des Ablagewinkels, in der Regel zu einer Ausstülpung mit steilerem Flankenwinkel und eine niedrigere Fadenspannung zu einer Ausstülpung mit flacherem Flankenwinkel führt. Dennoch können Fasern auf einer rechteckigen Nut flechttechnisch auch mit hohen Fadenspannungen nicht so abgelegt werden, dass sie an der Innenkontur der Nut vollständig anliegen; dazu bedarf es einer Nut mit schrägen Flanken, bspw. einer keilförmigen Nut. Zudem kann bei der Ablage von Fasern mit sehr kleinem Winkel zur axialen Richtung des Felgenbetts auch eine niedrige Fadenspannung von Vorteil sein, die die Ausbildung eines, die Ausstülpung bildenden, Fadenvorrats erlaubt. Im erfindungsgemäßen Verfahren werden die Fäden mit einer Kraft von 0,7 N bis 9 N, bevorzugt mit einer Kraft von 1 N bis 7 N und besonders bevorzugt mit einer Kraft von 2 N bis 5 N gespannt.

Neben der Fadenspannung ist auch der Ablagewinkel der Fasern beim Umflechten bzw. Umwickeln des Formwerkzeugs für die Ausbildung des Flanschs von Bedeutung. Die Ablage der Fasern in axialer Richtung des Felgenbetts hätte zur Folge, dass die Ausbildung ausreichend großer Ausstülpungen auch bei hohen Fadenspannungen problematisch wäre. Bei der Ablage der Endlosfasern quer zur axialen Richtung des Felgenbetts könnte das Umflechten bzw. Umwickeln dagegen mit sehr hohen Fadenspannungen erfolgen, da die Endlosfasern problemlos in der umlaufenden Nut abgelegt werden könnten. Dabei könnte es jedoch gerade in den Randbereichen des Flansches zu Faserabgleitungen kommen, woraus eine ungleichmäßige Faserverteilung im Flanschbereich resultiert. Im erfindungsgemäßen Verfahren muss daher eine geeignete Kombination von Fadenspannung und Ablagewinkel gewählt werden, mit der die Ausformung ausreichend großer Flansche mit gleichmäßiger Faserverteilung realisiert werden kann.

Bevorzugt handelt es sich bei dem, im erfindungsgemäßen Verfahren verwendeten Formwerkzeug um ein mehrteiliges Formwerkzeug, dessen einzelne Formteile axial gegeneinander verschiebbar sind. Dann wird die radial umlaufende oder segmentierte Nut besonders bevorzugt durch eine in axialer und radialer Richtung begrenzte Aussparung zwischen den Formteilen gebildet, deren Breite durch axiale Verschiebung der Formteile zueinander einstellbar ist.

In einer bevorzugten Ausführungsform des Verfahrens wird ein mehrteiliges Formwerkzeug verwendet, das eine radiale Teilung mit einer darin befindlichen Aussparung mit einer nahezu rechteckigen Querschnittform bzw. nahezu senkrecht nach innen gerichteten Flanken aufweist. Bei der Verwendung eines derartigen Formwerkzeuges führt die Ablage einer oder mehrerer Faserlagen über der Aussparung zunächst dazu, dass diese eine oder mehrere nach innen gerichtete Ausstülpungen bilden, die die Nut keilförmig überspannen und an der Innenkontur derselben nur partiell anliegen.

Weiterhin bevorzugt ist die Breite der Aussparung ist durch axiale Verschiebung der Formteile des mehrteiligen Formwerkzeuges einstellbar. Durch die der Faserablage nachfolgende axiale Verschiebung der Formteile des mehrteiligen Formwerkzeugs wird die Breite der Aussparung bzw. Nut anschließend verkleinert, wodurch die darin befindlichen Ausstülpungen, ähnlich wie beim Gesenkschmieden, umgeformt werden. Nach der Umformung liegen die Ausstülpungen an der Innenkontur der nun verengten Nut vorteilhaft vollständig und formschlüssig an. Somit werden die Ausstülpungen durch das axiale Verschieben der Formteile des Formwerkzeugs vorteilhaft in eine endkonturnahe Form des Flansches gebracht. Besonders vorteilhaft sind die Endlosfasern im Bereich der Ausstülpungen nach der Umformung in annähernd radialer Richtung des Felgenbetts orientiert. Durch den kontinuierlichen Übergang der Orientierung dieser Fasern zur Orientierung der felgenbettbildenden Fasern entlang des Umfangs des Felgenbetts, sowohl der radial inneren als auch der radial äußeren Schicht, wird dadurch eine optimale Krafteinleitung- und Übertragung zwischen Felgenbett und Radscheibe bzw. Radstern ermöglicht.

In einer ebenfalls bevorzugten Ausführungsform des Verfahrens wird ein mehrteiliges Formwerkzeug mit einer Aussparung mit einer nahezu keilförmigen Querschnittform bzw. mit schräg nach innen gerichteten Flanken verwendet. Bei der Verwendung eines derartigen Formwerkzeugs führt die Ablage ein oder mehrerer Faserlagen über der Aussparung dazu, dass diese eine oder mehrere nach innen gerichtete Ausstülpungen bilden, die an der Innenkontur der Aussparung vollständig anliegen. Da die Faserlagen dem Verlauf des Formwerkzeugs einschließlich der Aussparung völlig formschlüssig folgen, weisen die Ausstülpungen an Ihrer Oberfläche eine der Innenkontur der Aussparung entsprechende Vertiefung auf. In einer besonders bevorzugten Ausführungsform wird diese Vertiefung durch das Einbetten von Einlegern ausgeglichen, die der Innenkontur der Aussparung angepasst sind. Diese Einleger können sowohl in Form eines gebrochenen Kreisrings, bspw. als Sprengring, oder als einzelne Kreissegmente vorliegen.

Das im erfindungsgemäßen Verfahren verwendete Formwerkzeug weist vorzugsweise zusätzlich Kreissegmente auf, die sich in der zwischen den einzelnen Formteilen befindlichen Aussparung befinden. Die Abmessungen der Aussparung werden dann in axialer Richtung durch die axial verschiebbaren Formteile des Formwerkzeuges und in radialer Richtung durch die Kontur der radial verschiebbaren Kreissegmente bestimmt. Somit ist die Breite der Aussparung durch axiale Verschiebung der Formteile und die Höhe durch radiale Verschiebung der Kreissegmente einstellbar. Weiterhin können die Kreissegmente aus der Aussparung entnommen werden, wenn diese durch axiales Verschieben der Formteile geweitet ist. Sind die Kreissegmente aus der Aussparung entnommen, werden Form und Abmessung der Aussparung wieder allein durch die Formteile bestimmt. Weiterhin bevorzugt ist die Sicherung der Kreissegmente in der zwischen den Formteilen befindlichen Aussparung durch axial bewegliche Schiebteile. Dadurch ist eine Entnahme der Kreissegmente auch ohne Vergrößerung der Breite der Aussparung, nur durch Entriegelung der Schiebeteile möglich. Die Schiebeteile sind darüber hinaus bevorzugt so ausgeformt, dass durch deren Fixierung an der Außenseite eines der Formteile die Abmessung der Aussparung und damit die endkonturnahe Umformung der Ausstülpungen bestimmt werden kann.

In einer weiteren bevorzugten Ausgestaltung des erfindungsgemäßen Verfahrens befinden sich Kreissegmente mit einer nahezu keilförmigen Oberflächenkontur bzw. keilförmig verlaufenden Flanken in der Aussparung. Die Ablage ein oder mehrerer Faserlagen über Aussparung und Kreissegmenten führt dazu, dass diese ein oder mehrere Ausstülpungen bilden, die an der Innenkontur der Kreissegmente vollständig anliegen. Anschließend werden die Kreissegmente entnommen, entweder durch Vergrößerung der Breite der Aussparung durch axiale Verschiebung der Formteile oder durch das Lösen der Verriegelung der Kreissegmente durch axiale Verschiebung der Schiebeteile. Sind die Kreissegmente entfernt, wird durch axiale Verschiebung der Formteile die Breite der Aussparung verringert und die darin befindlichen Ausstülpungen umgeformt. Nach der Umformung liegen die Ausstülpungen vorteilhaft vollständig und formschlüssig an der Innenkontur der verengten Aussparung an.

Durch die kontrollierte Ablage der Fasern auf der Oberfläche der Kreissegmente sowie die anschließende endkonturnahe Umformung der Ausstülpungen erhält man nach der Konsolidierung einen Flansch mit besonders homogener Faserverteilung und einem sehr hohen Faservolumengehalt. Der Faservolumengehalt des Flansches des erfindungsgemäßen Felgenbetts beträgt dabei mindestens 40%, besonders bevorzugt mindestens 50% und mehr, bevorzugt mindestens 60% und mehr und besonders bevorzugt 90%. Dadurch weist der Flansch vorteilhaft besonders homogene Eigenschaften hinsichtlich mechanischer oder thermischer Belastungen und besonders wenig Schwach- oder Störstellen auf. Die formschlüssige Ablage der Fasern auf der Oberfläche der Kreissegmente ermöglicht zusammen mit der Umformung der Ausstülpungen besonders vorteilhaft eine sehr präzise Einstellung der Faserorientierung im Flansch sowie in dessen Übergangsbereich zum Felgenbett.

In einer weiteren bevorzugten Ausgestaltung des erfindungsgemäßen Verfahrens befinden sich Kreissegmente mit einer nahezu ebenen Innenkontur in der Aussparung. Die Ablage ein oder mehrerer Faserlagen über Aussparung und Kreissegmenten führt dazu, dass diese an der ebenen, mit dem restlichen Felgenbett abschließenden Oberfläche der Kreissegmente vollständig anliegen. Anschließend werden die Kreissegmente entnommen, entweder durch Vergrößerung der Aussparung oder bevorzugt durch Entriegelung mittels axialer Verschiebung der Schiebeteile. Die nun eben über die Aussparung verlaufenden Faserlagen werden dann mittels Stempelsegmenten in die geweitete Aussparung eingepresst. Durch axiale Verschiebung der Formteile zueinander wird anschließend die Breite der Aussparung verringert und die Ausstülpungen umgeformt. Nach der Umformung liegen die Ausstülpungen vorteilhaft vollständig und formschlüssig an der Innenkontur der nun verengten Nut an.

Weiterhin bevorzugt ist die Kombination der Umformung der Ausstülpungen durch axiale Verschiebung der Formteile und die Einbettung von Einlegern in die Ausstülpungen. Dabei kann das Einbetten der Einleger vorteilhaft der Straffung bzw. Ausrichtung der flanschbildenden Faserlagen zueinander vor der Umformung der Ausstülpungen dienen. Insbesondere können die bereits erwähnten Stempelsegmente nach dem Einpressen der Faserlagen in die Aussparung als Einleger in den Ausstülpungen verbleiben.

Weiterhin bevorzugt werden nach der Verengung der Aussparung und Umformung der Ausstülpungen bzw. nach der Einbettung der Einleger in die Ausstülpungen weitere Faserlagen auf dem Felgenbett abgelegt. Da die Aussparung nun vollständig durch die umgeformten Ausstülpungen der zuvor abgelegten Faserlagen bzw. durch Faserlagen und Einleger ausgefüllt ist, bilden die neu abgelegten Faserlagen keine Ausstülpungen über der Aussparung aus. Dadurch bilden diese Faserlagen bevorzugt eine zweite Schicht, deren Faserlagen nur im Bereich des Felgenbetts abgelegt sind und deren Endlosfasern nicht in den Flansch einlaufen. Dadurch überdecken bzw. überspannen sie die nach oben offenen Ausstülpungen der radial darunter liegenden ersten Schicht, was zu einer Verbesserung der Stabilität des Felgenbetts führt. Nach der Ablage der zweiten Schicht von felgenbildenden Faserlagen wird das Formwerkzeug durch axiale Verschiebung der Formteile geöffnet und die fertige Preform entnommen.

Weiterhin bevorzugt ist die Ablage von Faserlagen, sowohl flansch- als auch felgenbettbildender, in axial begrenzten Bereichen des Felgenbetts. Diese Faserlagen durchziehen das Felgenbett somit nur zum Teil. Die Ablage dieser Faserlagen kann durch das Aufbringen zusätzlicher Faserlagen in Form textiler Patches, bspw. Gelegezuschnitten oder Gewebeband, erfolgen. Ebenfalls bevorzugt ist die Ablage derartiger aus Endlosfasern gebildeter Faserlagen, durch Umflechten oder -wickeln, durch die Einstellung von Umkehrpunkten an beliebigen Stellen des Felgenbetts, insbesondere an Stellen zu beiden Seiten des Flansches. Bevorzugt die Ablage von diesen zusätzlichen Faserlagen über und im Bereich nahe dem Flansch, sowohl zu Ausbildung des Flansches (flanschbildende Faserlagen) als auch zur Überspannung des Flansches (felgenbettbildende Faserlagen). In beiden Fällen bewirkt die Ablage solcher Faserlagen vorteilhaft eine Verminderung der Kerbwirkung im Bereich des Flansches.

Die Konsolidierung der Preform erfolgt anschließend bevorzugt in einem mit Hilfe eines, vorzugsweise metallischen und mehrteiligen, Außenwerkzeugs. Besonders bevorzugt erfolgt die Konsolidierung der Preform in einem RTM-Verfahren. In jedem Fall weist das Außenwerkzeug eine der Form der Preform entsprechende Kammer auf, in welche die Preform eingelegt wird. In das mit der Preform bestückte Außenwerkzeug wird dann geeignetes Matrixmaterial unter einem bestimmten Druck und mit bestimmter Temperatur injiziert. Mit der Aushärtung des Matrixwerkstoffs wird die Preform zum fertigen Felgenbett konsolidiert.

### Ausführungsbeispiele

Nachfolgend wird die Erfindung anhand von vier Ausführungsbeispielen erläutert.

Dabei zeigen:
- Fig. 1:: das Ablegen von Faserlagen auf einem mehrteiligen Formwerkzeug mit vergrößerter Aussparung mittels einer Radialflechtmaschine,
- Fig. 2:: eine erste Schicht von flanschbildenden Faserlagen mit nach innen gerichteten Ausstülpungen auf einem mehrteiligen Formwerkzeug mit vergrößerter Aussparung,
- Fig. 3:: eine erste Schicht von flanschbildenden Faserlagen mit umgeformten Ausstülpungen auf einem mehrteiligen Formwerkzeug mit verkleinerter Aussparung,
- Fig. 4:: das Ablegen einer zweiten felgenbildenden Schicht von Faserlagen ohne nach innen gerichtete Ausstülpungen auf einem mehrteiligen Formwerkzeug mit verkleinerter Aussparung und darauf abgelegten flanschbildenden Faserlagen mit in der Aussparung befindlichen umgeformten Ausstülpungen,
- Fig. 5:: eine perspektivische Ansicht des erfindungsgemäßen Felgenbetts mit integriertem Flansch,
- Fig. 6:: einen Querschnitt des erfindungsgemäßen Felgenbetts mit integriertem Flansch,
- Fig. 7:: einen Querschnitt des erfindungsgemäßen Felgenbetts mit Detaildarstellungen des Flansches,
- Fig. 8:: das Ablegen einer ersten Schicht von flanschbildenden Faserlagen mit nach innen gerichteten Ausstülpungen auf einem mehrteiligen Formwerkzeug mit fixer Aussparung mittels einer Radialflechtmaschine,
- Fig. 9:: das Ablegen einer zweiten Schicht von felgenbildenden Faserlagen ohne nach innen gerichtete Ausstülpungen auf einer ersten Schicht von Faserlagen mit in deren Ausstülpungen integriertem Einleger,
- Fig.10:: das Ablegen sowohl von felgenbett- als auch flanschbildenden Faserlagen mit Umkehrpunkten im Bereich des Felgenbetts, insbesondere im Bereich nahe des Flansches,
- Fig. 11:: das Ablegen einer ersten Schicht von flanschbildenden Faserlagen mit nach innen gerichteten Ausstülpungen auf einem mehrteiligen Formwerkzeug mit vergrößerter Aussparung und darin befindlichen Kreissegmenten mittels einer Radialflechtmaschine,
- Fig. 12:: die radiale Entnahme der Kreissegmente aus der durch axiale Verschiebung der Formteile vergrößerten Aussparung,
- Fig. 13:: das Ablegen einer zweiten felgenbildenden Schicht von Faserlagen ohne nach innen gerichtete Ausstülpungen auf einem mehrteiligen Formwerkzeug mit verkleinerter Aussparung und darauf abgelegten flanschbildenden Faserlagen mit in der Aussparung befindlichen umgeformten Ausstülpungen,
- Fig. 14:: das Ablegen einer ersten Schicht von flanschbildenden Faserlagen mit nach innen gerichteten Ausstülpungen auf einem mehrteiligen Formwerkzeug mit vergrößerter Aussparung und darin befindlichen Kreissegmenten und Schiebeteilen mittels einer Radialflechtmaschine,
- Fig. 15:: eine erste Schicht von flanschbildenden Faserlagen ohne nach innen gerichtete Ausstülpungen auf einem mehrteiligen Formwerkzeug mit geweiteter Aussparung und darin befindlichen Kreissegmenten und Schiebeteilen,
- Fig. 16:: das Einpressen einer ersten Schicht von flanschbildenden Faserlagen in die vergrößerte Aussparung eines mehrteiligen Formwerkzeuges ohne darin befindliche Kreissegmente mittels Stempelsegmenten,
- Fig. 17:: eine erste Schicht von flanschbildenden Faserlagen mit umgeformten Ausstülpungen auf einem mehrteiligen Formwerkzeug mit verkleinerter Aussparung,
- Fig. 18:: das Ablegen einer zweiten felgenbildenden Schicht von Faserlagen ohne nach innen gerichtete Ausstülpungen auf einem mehrteiligen Formwerkzeug mit verkleinerter Aussparung und darauf abgelegten flanschbildenden Faserlagen mit in der Aussparung befindlichen umgeformten Ausstülpungen,
- Fig.19:: ein textiler Patch, abgelegt auf einem mehrteiligen Formwerkzeug mit verkleinerter Aussparung und darauf abgelegten flanschbildenden Faserlagen mit in der Aussparung befindlichen umgeformten Ausstülpungen.

### Ausführungsbeispiel 1

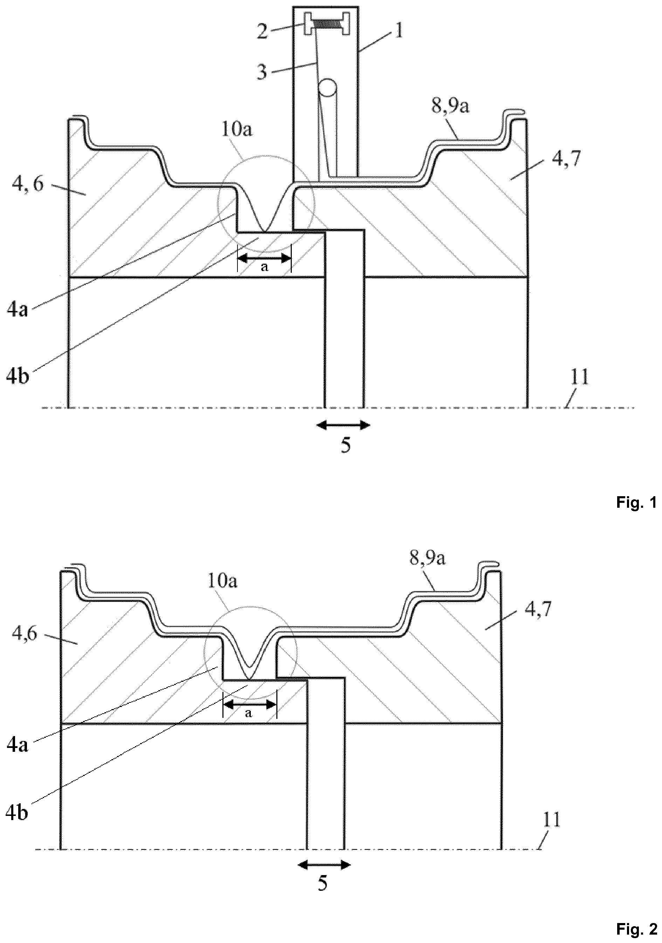

Das in Fig.1 gezeigte mehrteilige Formwerkzeug 4, weist ein erstes Formteil 6 und ein zweites Formteil 7 auf, die axial zueinander verschiebbar sind. Zwischen den beiden Formteilen 6, 7 weist das Formwerkzeug eine radial umlaufene rechteckige Aussparung 10a, mit den Flanken 4a und dem Boden 4b auf. Entsprechend der axialen Position der beiden entlang der Verschubrichtung 5 verschiebbaren Formteile 6, 7 weist die Aussparung 10a eine Breite a auf. Das Formwerkzeug 4 dient bei der Herstellung eines erfindungsgemäßen Felgenbetts als Flechtkern einer Radialflechtmaschine 1. Durch diese wird das Formwerkzeug 4 entlang der Rotationssymmetrieachse 11 axial vor- und zurückbewegt, wobei von radialen auf den Flechtpunkt gerichteten Flechtklöppeln 2 abgerollte Flechtfäden 3 auf dem Formwerkzeug 4 abgelegt werden. Durch die sich gegenseitig kreuzenden Bewegung der Klöppel 2 entlang zweier sinusförmiger Klöppelbahnen kreuzen und überschneiden sich die von den Klöppeln 2 zum Formwerkzeug 4 laufenden Flechtfäden 3 gegenseitig. Dadurch wird auf dem Flechtkern ein formschlüssiges Fasergeflecht 8 abgelegt, wobei eine einzelne Faserlage jeweils während einer Vor- oder Zurückbewegung des Formwerkzeugs 4 abgelegt wird.

Durch die Überflechtung der geöffneten Aussparung 10a während einer vollständigen Vor- und Zurückbewegung des Formwerkzeugs 4 durch die Radialflechtmaschine 1 werden die in Fig.2 gezeigten, zwei flanschbildende Faserlagen 9a mit einem Faserwinkel von ± 80° bezogen auf die axiale Richtung auf dem Formwerkzeug 4 abgelegt. Diese überspannen die Aussparung 10a keilförmig und liegen nur partiell an deren Boden 4b jedoch nicht an den Flanken 4a an, wohingegen sie im Bereich des restlichen Felgenbetts formschlüssig am Formwerkzeug 5 anliegen. Da die zwei abgelegten Faserlagen 9a aus Endlosfasern bestehen, weisen die Faserlagen zwei Umkehrpunkte auf, einen am rechten Felgenhorn des Felgenbetts und einem innerhalb der rechteckigen Aussparung 10a, wobei an den Umkehrpunkten an den Felgenhörnern die Faserlagen 9a miteinander verbunden sind.

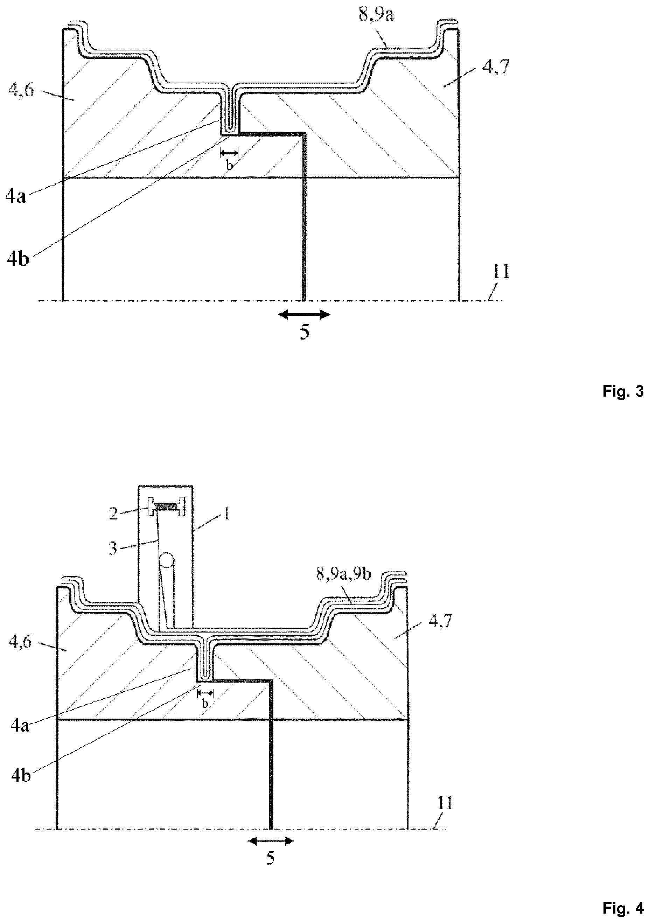

In Fig. 3 ist die Breite der Aussparung 10a durch axiale Verschiebung der Formteile 6, 7 entlang der Verschubrichtung 5 auf die Breite b verkleinert. Dadurch wurden die diese Aussparung keilförmig überspannenden flanschbildenden Faserlagen 9a umgeformt. Durch einen Formschluss der Formteile 6, 7 in deren unterem Bereich wird dabei die Breite b der verkleinerten Aussparung und somit der Verdichtungsgrad bzw. das spätere Faser-zu-Matrix-Verhältnis der Faserlagen 9a bestimmt. Diese liegen nun auch in der Aussparung formschlüssig an den Flanken 4a und dem Boden 4b an und bilden die Aussparung bzw. den Flansch endkonturnahe ab.

Wie in Fig. 4 gezeigt, wird das Formwerkzeug mit der auf die Breite b verkleinerten Aussprung und den darauf abgelegten sowie umgeformten Faserlagen 9a erneut überflochten. Durch erneutes vollständiges Vor- und Zurückbewegen des Flechtkerns 4 entlang der Rotationssymmetrieachse 11 durch die Radialflechtmaschine werden die felgenbettbildenden Faserlagen 9b mit einem Faserwinkel von ± 80° bezogen auf die axiale Richtung formschlüssig auf dem Formwerkzeug 5 abgelegt. Dabei überspannen diese Faserlagen 9b die umgeformten Faserlagen 9a und sorgen so für eine erhöhte Stabilität des Felgenbetts.

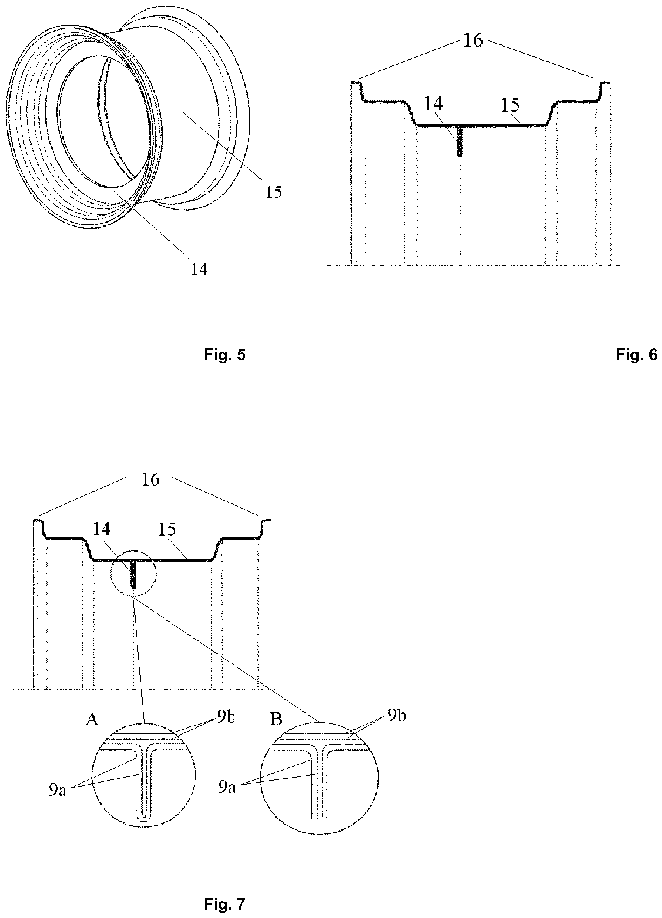

Anschließend kommt im Bereich des Felgenbetts ein mehrteiliges metallisches Außenwerkzeug zur Verpressung bei Infiltration und Konsolidierung zum Einsatz. Daraus resultiert das in Fig. 5 in perspektivischer und in Fig. 6 in Schnittdarstellung gezeigte erfindungsgemäße Felgenbett mit hochfest integriertem Flansch. Eine Detaildarstellung des Verlaufs der Faserlagen im Flansch ist in Fig. 7 dargestellt. Dabei zeigt Fig. 7 A den Verlauf von Endlosfasern die ohne Faserunterbrechung in den Flansch ein- und wieder auslaufen und am unteren Ende des Flansches einen Umkehrpunkt aufweisen. Derartige Endlosfasern können vorzugsweise in einem Umflecht- oder Umwickelprozess auf dem Formwerkzeug abgelegt werden. Fig. 7 B zeigt den Verlauf von Fasern, die ohne Faserunterbrechung in den Flansch einlaufen. Derartige Faserlagen werden bevorzugt durch separate Ablage von textilen Patches auf den Formteilen des Formwerkzeugs sowie deren Umlegen in die Nut und Umformung durch Verschiebung der Formteile gebildet.

### Ausführungsbeispiel 2

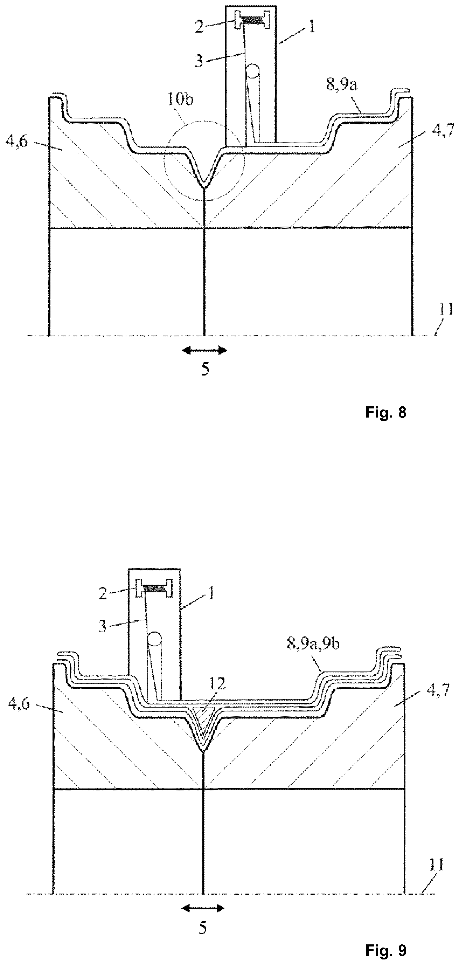

Die Ablage der flanschbildenden Faserlagen 9a erfolgt auf einem in Fig. 8 gezeigten, aus zwei Formteilen 6, 7 bestehenden Formwerkzeug mit V-förmiger Aussparung 10b fixer Breite, wobei die Fasern der Faserlagen 9a vollständig an der Innenkontur derselben anliegen. Wie in Fig. 9 gezeigt, werden nach der formschlüssigen Ablage der Faserlagen 9a auf dem Formwerkzeug 4 V-förmige Einleger 12 in die, der Kontur der Aussparung 10b entsprechenden, nach innen gerichteten Ausstülpungen der Faserlagen 9a integriert. Dadurch werden diese vorteilhaft weiter an die Oberfläche der Aussparung 10c des Formwerkzeugs 4 angepresst. Weiterhin schließt die Oberfläche des Einlegers 12 vorteilhaft mit der Oberfläche der Faserlagen 9a im Bereich des Felgenbetts ab. Anschließend erfolgt die Ablage der felgenbettbildenden Faserlagen 9b auf den Faserlagen 9a sowie der in diese eingebetteten Einleger 12.

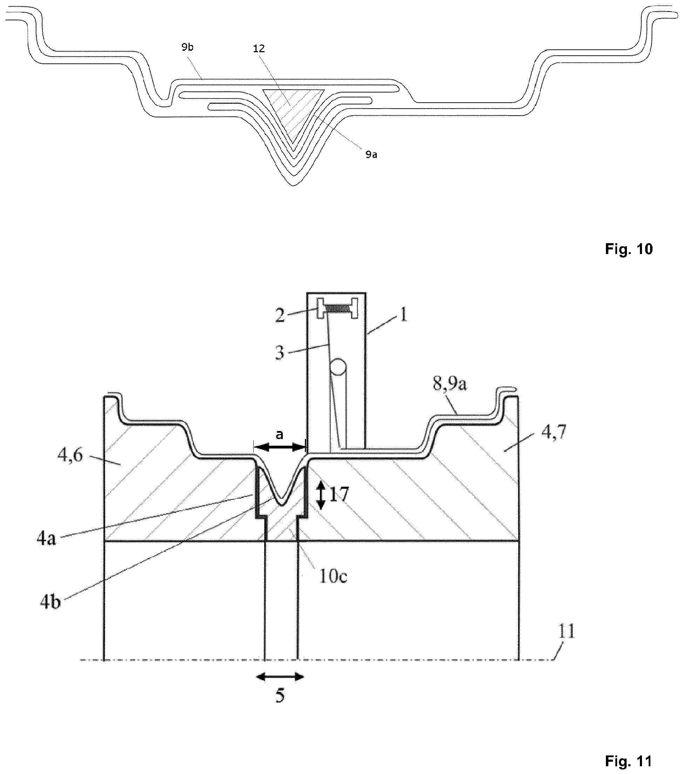

Wie in Fig. 10 gezeigt, ist zusätzlich die Ablage von flansch- und felgenbettbildenden Schichten 9a sowie felgenbettbildenden Schichten 9b mit Umkehrpunkten im Bereich des Felgenbetts, insbesondere im Bereich in der Nähe des Flansches möglich. Dadurch erfolgt eine häufigere Überflechtung des Flanschbereichs, bzw. die Ablage von zusätzlichen Flechtlagen verglichen mit dem restlichen Felgenbett. Dadurch wird vorteilhaft eine zusätzliche Verstärkung des Flanschbereiches erzielt. Die in radialer Ausrichtung nicht über das gesamte Felgenbett ausgedehnten Schichten können sowohl zur Ausbildung eines Flansches umgeformt werden (9a) als auch nach dem Einbetten des Einlegers 12 auf diesem und den flanschbildenden Schichten abgelegt werden (9b).

Nachfolgend werden die Formteile 6, 7 axial gegeneinander verschoben und die Preform entnommen. Die Konsolidierung der Preform erfolgt in einem mehrteiligen metallischen Außenwerkzeug, wobei die aus Schaumstoff bestehenden Einleger 12 der Verpressung des Flanschbereichs bei Infiltration und Konsolidierung dienen und anschließend im Bauteil verbleiben.

### Ausführungsbeispiel 3

Das in Fig. 11 abgebildete mehrteilige Formwerkzeug 4 besteht aus zwei Formteilen 6, 7 die entlang der Verschubrichtung 5 axial zueinander verschiebbar sind und eine rechteckige Aussparung mit geraden Flanken und der Breite a = 50 mm bilden. In diese Aussparung sind V-förmige Ringsegmente 10c integriert, deren Außenkontur formschlüssig an den Flanken 4a der Aussparung anliegt und deren Boden 4b die Innenkontur der Aussparung bestimmt. Durch flechttechnische Ablage von Flechtfäden 3 auf dem Formwerkzeug 4, werden die flanschbildenden Faserlagen 9a formschlüssig auf dem Boden 4b der V-förmigen Ringsegmente 10c abgelegt. Den Bereich der Aussparung überspannen die Faserlagen keilförmig und liegen somit vollständig an dem Boden 4b der Ringsegmente 10c an. Durch die formschlüssige Ablage der Faserlagen 9a auch im Bereich der Aussparung lassen sich die Fadenspannung und der Fadenwinkel der Flechtfäden 3 vorteilhaft genauer kontrollieren.

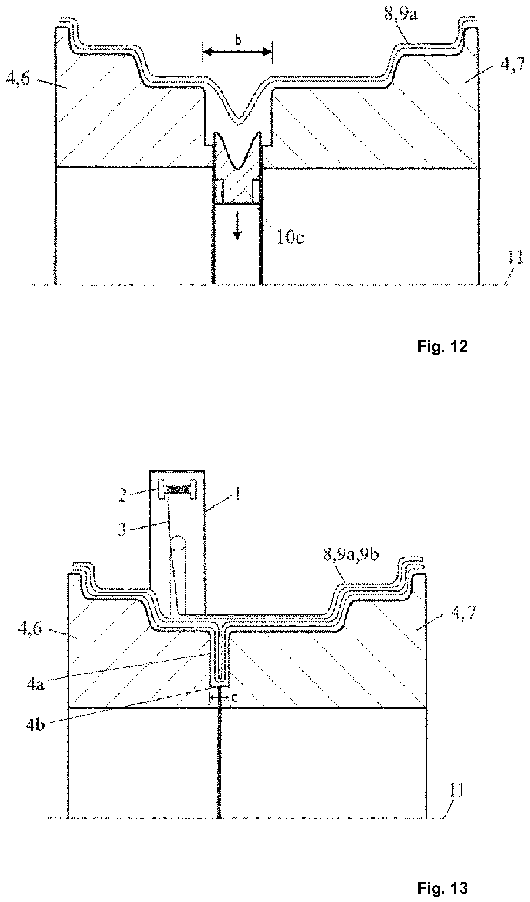

Nachdem die ersten beiden Geflechtlagen aufgebracht sind, werden, wie in Fig. 12 gezeigt, die Formteile 6, 7 auf die Breite b > 50 mm geöffnet, so dass sich die Ringsegmente 10c einzeln radial nach innen verschieben und so entnehmen lassen. Dies ermöglicht, wie in Fig. 13 gezeigt, die Schließung der Formteile bei Verringerung der Breite der Aussparung auf die Breite c = 10 mm. Dadurch erfolgt die Umformung der Ausstülpungen der flanschbildenden Faserlagen 9a. Durch die Umformung werden die Faserlagen 9a im Bereich der Aussparung formschlüssig an die Flanken 4a und den Boden 4b der von den Formteilen 6, 7 gebildeten Aussparung angepresst und somit endkonturnah zum Flansch ausgeformt. Durch die kontrollierte Ablage der Faserlagen 9a auf der Oberfläche der Kreissegmente 10c liegen die Faserlagen 9a auch nach der Umformung wohlgeordnet im Flanschbereich vor.

Anschließenden erfolgt eine neue Überflechtung von Formwerkzeug und Faserlagen 9a mit den felgenbettbildenden Faserlagen 9b. Für die Verpressung bei Infiltration und Konsolidierung kommt im Bereich des Felgenbettes ein mehrteiliges metallisches Außenwerkzeug zum Einsatz.

### Ausführungsbeispiel 4

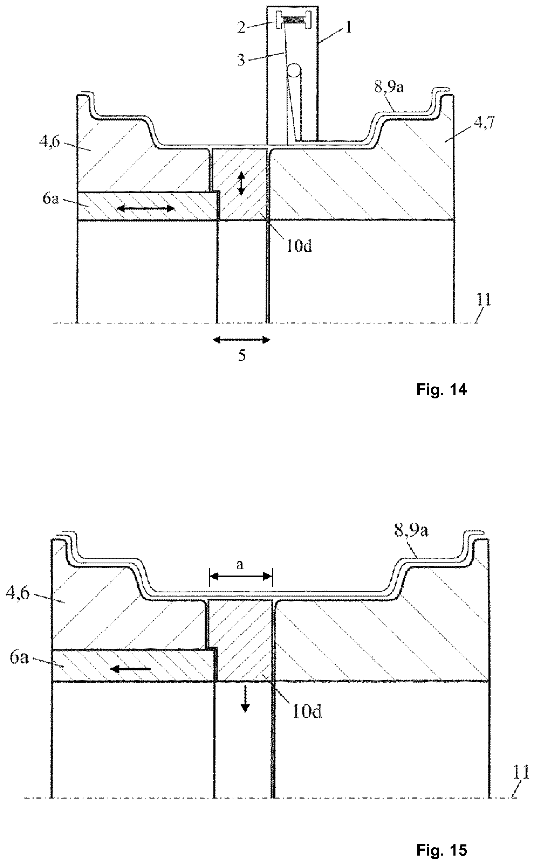

Das in Fig. 14 abgebildet Formwerkzeug 4 weist eine rechteckige Aussparung mit der Breite a mit geraden Flanken zwischen den beiden Formteilen 6, 7 auf. In dieser Aussparung befinden sich rechteckige Ringsegmente 10d die durch ein Schiebteil 6a radial fixiert sind. Die rechteckigen Ringsegmente sind dabei so geformt, dass ihre Oberfläche mit der Oberfläche des restlichen Felgenbetts eben abschließt. Wird das Formwerkzeug 4 mit einer Radialflechtmaschine 1 umflochten, werden die Faserlagen 9a wie in Fig. 15 gezeigt formschlüssig im gesamten Bereich des Felgenbetts abgelegt.

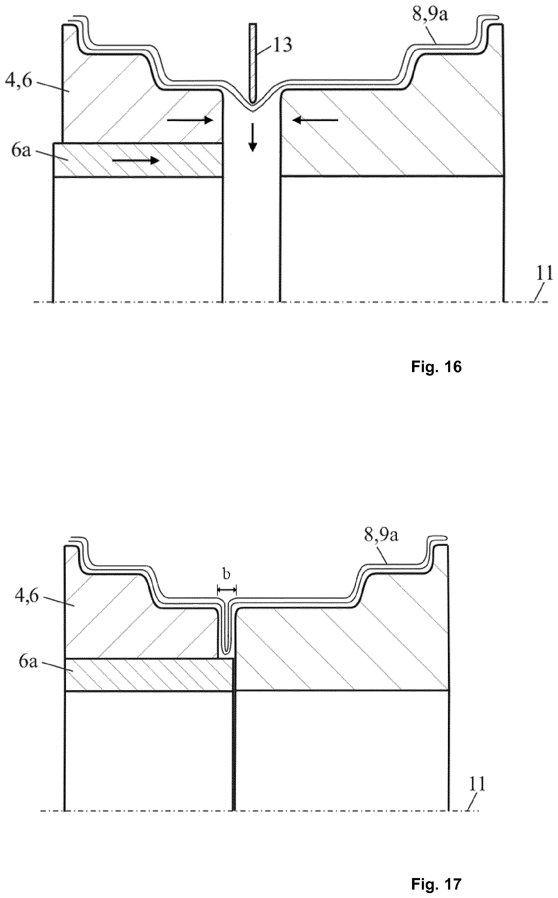

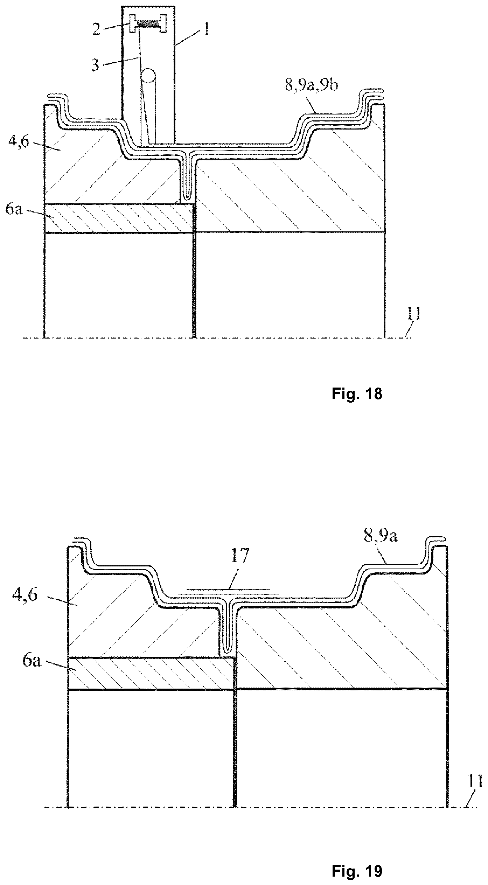

Durch axiale Bewegung des Schiebeteils 6a wird die Verriegelung der Kreissegmente 10c gelöst und diese können ohne axiale Verschiebung der Formteile 6, 7 aus der Aussparung entfernt werden (siehe Pfeile). Mit Hilfe von Stempelsegmenten 13 werden die Faserlagen 9a in die nun geöffnete Aussparung eingepresst (Fig. 16). Anschließend oder gleichzeitig werden die Formteile 6, 7 axial verschoben und dadurch die Breite der Aussparung auf die Breite b verringert sowie die Faserlagen 9a umgeformt. Das an der Außenseite des Formteils 6 fixierte Schiebeteil 6a definiert dabei gleichzeitig den für die Abbildung des Flansches notwendigen Abstand zwischen den beiden Formteilen 6, 7 (Fig. 17). Nachdem die Stempelsegmente 13 entnommen wurden, wird das Formwerkzeug 5 mit den darauf abgelegten Faserlagen 9a mit den Faserlagen 9b erneut überflochten (Fig. 18). Wie in Fig. 19 gezeigt, erfolgt zusätzlich zur flechttechnischen Ablage der felgenbettbildenden Faserlagen die Ablage von textilen Patches 17 im Bereich der umgeformten Ausstülpungen. Diese verringern zusätzlich zu den felgenbettbildenden Faserlagen die durch den Flansch verursachte Kerbwirkung. Für die Verpressung bei Infiltration und Konsolidierung kommt im Bereich des Felgenbettes ein mehrteiliges metallisches Außenwerkzeug zum Einsatz.

### Bezugszeichenliste

- 1: Radialflechtmaschine
- 2: Flechtklöppel
- 3: Flechtfaden
- 4: Formwerkzeug
- 4a: Flanken der Aussparung
- 4b: Boden der Aussparung
- 5: Verschubrichtung der Formteile
- 6: Formteil 1
- 6a: Schieberteil
- 7: Formteil 2
- 8: Fasergeflecht
- 9a: Flansch- und felgenbettbildende Faserlagen 1 und 2
- 9b: Felgenbettbildende Faserlagen 3 und 4
- 10a: Rechteckige Aussparung
- 10b: V-förmige Aussparung
- 10c: V-förmige Ringsegmente
- 10d: Rechteckige Ringsegmente
- 11: Rotationssymmetrieachse
- 12: Ringsegmente aus Schaumstoff
- 13: Stempelsegmente
- 14: Flansch
- 15: Felgenbett
- 16: Felgenhörner
- 17: textiler Patch

## Patentansprüche

1. Felgenbett aus Faserverbundwerkstoff mit einem an der Innenseite des Felgenbetts befindlichen Flansch zur Befestigung eines Radsterns bzw. einer Radscheibe **dadurch gekennzeichnet, dass** der Flansch (14) durch nach innen gerichtete Ausstülpungen von geflochtenen oder gewickelten Faserlagen des Felgenbetts (15) gebildet ist, wobei die geflochtenen oder gewickelten Faserlagen ohne Unterbrechung vom Felgenbett (15) in den Flansch (14) einlaufen und die Flanke des Flansches (14) als formideales Gegenstück zu an Radscheibe bzw. Radstern befindlichen Anbringungselementen ausgeformt ist.

2. Felgenbett aus Faserverbundwerkstoff nach Anspruch 1, **dadurch gekennzeichnet, dass** die Faserlagen ohne Unterbrechung vom Felgenbett (15) in den Flansch (14) ein- und wieder auslaufen und das untere Ende des Flansches (14) durch einen Umkehrpunkt der Faserlagen gebildet ist.

3. Felgenbett aus Faserverbundwerkstoff nach einem der Ansprüche 1 und 2, **dadurch gekennzeichnet, dass** die Faserlagen das gesamte Felgenbett (15) sowie den gesamten Flansch (14) unterbrechungsfrei durchziehen.

4. Felgenbett aus Faserverbundwerkstoff nach einem der vorangehenden Ansprüche, **dadurch gekennzeichnet, dass** ein Teil der Faserlagen das Felgenbett nur teilweise durchzieht.

5. Felgenbett aus Faserverbundwerkstoff nach einem der vorangehenden Ansprüche, **dadurch gekennzeichnet, dass** die Faserlagen aus geflochtenen Endlosfasern gebildet sind.

6. Felgenbett aus Faserverbundwerkstoff nach einem der vorangehenden Ansprüche, **dadurch gekennzeichnet, dass** eine radial innenliegende Schicht von Faserlagen (9a) des Felgenbetts, bestehend aus mindestens einer flanschbildenden Faserlage, in den Flansch einlaufende Fasern aufweist.

7. Felgenbett aus Faserverbundwerkstoff nach einem der vorangehenden Ansprüche, **dadurch gekennzeichnet, dass** eine radial außenliegende Schicht von Faserlagen (9b) des Felgenbetts, bestehend aus mindestens einer felgenbettbildenden Faserlage, und/oder im Bereich der Ausstülpungen zusätzlich aufgebrachten textilen Patches (17) keine in den Flansch einlaufenden Fasern aufweist.

8. Felgenbett aus Faserverbundwerkstoff nach einem der vorangehenden Ansprüche, aufweisend mindestens zwei Schichten, die in radialer Richtung des Felgenbetts übereinander angeordnet sind, wobei
- die Fasern der flanschbildenden Faserlagen (9a) einen Faserwinkel von ± 3° bis ± 87°, bevorzugt ± 15° bis ± 65° und weiterhin bevorzugt ± 20 bis ± 60° bezogen auf die axiale Richtung des Felgenbetts und
- die Fasern der felgenbettbildenden Faserlagen (9b) einen Faserwinkel von ± 3° bis ± 87°, bevorzugt ± 20° bis ± 75° und weiterhin bevorzugt ± 30° bis ± 70° bezogen auf die axiale Richtung des Felgenbetts aufweisen.

9. Felgenbett aus Faserverbundwerkstoff nach einem der vorangehenden Ansprüche, teilweise oder vollständig bestehend aus textilen Halbzeugen mit Faserorientierungen von ± 0° bis ± 90°, bevorzugt ± 3° bis ± 87°° bezogen auf die axiale Richtung des Felgenbetts.

10. Felgenbett aus Faserverbundwerkstoff nach einem der vorangehenden Ansprüche, **dadurch gekennzeichnet, dass** der Flansch (14) umlaufend oder in Form einzelner Kreissegmente an der Innenseite des Felgenbetts vorliegt.

11. Felgenbett aus Faserverbundwerkstoff nach einem der vorangehenden Ansprüche, **dadurch gekennzeichnet, dass** Einleger in Form eines gebrochenen Kreisringes oder einzelner Kreissegmente (12) in die Ausstülpungen der Faserlagen des Flansches eingebettet sind.

12. Felgenbett aus Faserverbundwerkstoff nach einem der vorangehenden Ansprüche, **dadurch gekennzeichnet, dass** der Flansch (14) eine rechteckige Geometrie mit geraden Flanken oder eine V-förmige Geometrie mit schrägen Flanken sowie eckige oder gerundete Kanten aufweist.

13. Verfahren zur Herstellung eines Felgenbetts nach Anspruch 1, **dadurch gekennzeichnet, dass**
- die Ablage von Fasermaterial durch einen Umflecht- oder Wickelprozess auf einem der Kontur des Felgenbetts (15) entsprechenden Formwerkzeugs (4) mit einer umlaufenden oder segmentierten radialen Nut erfolgt,
- wobei die Ablage derart erfolgt, dass die Fasern des Fasermaterials mindestens einer Faserlage in die Nut einlaufen,
- somit eine Faserpreform mit mindestens einer Faserlage mit nach innen in die Nut gerichteten Ausstülpungen gebildet wird,
- und diese Faserpreform anschließend mit einem Matrixwerkstoff konsolidiert wird.

14. Verfahren nach Anspruch 13 **dadurch gekennzeichnet, dass**
- die Ablage von Fasermaterial auf einem mehrteiligen Formwerkzeug (4) erfolgt, wobei
- die Nut durch eine in axialer und radialer Richtung begrenzte Aussparung zwischen den einzelnen Formteilen gebildet ist.

15. Verfahren nach einem der Ansprüche 13 bis 14 **dadurch gekennzeichnet, dass**
- die Breite der Nut durch axiale Verschiebung der Formteile (6, 7) zueinander einstellbar ist.

16. Verfahren nach einem der Ansprüche 13 bis 15 **dadurch gekennzeichnet, dass**
- die nach innen gerichtete Ausstülpung mindestens einer Faserlage die Nut keilförmig überspannt,
- an der Innenkontur derselben nur partiell anliegt und
- durch axiale Verschiebung der Formteile (6, 7) die Breite der Nut verkleinert und die Ausstülpung umgeformt wird.

17. Verfahren nach einem der Ansprüche 13 bis 16 **dadurch gekennzeichnet, dass**
- die nach innen gerichtete Ausstülpung mindestens einer Faserlage, welche die Nut überspannt, an der sich radial nach innen verjüngenden Innenkontur derselben vollständig anliegt und
- der Innenkontur angepasste Einleger (12) in Form eines gebrochenen Kreisringes oder einzelner Kreissegmente in die Ausstülpungen der Faserlagen des Flansches (14) eingebettet werden.

18. Verfahren nach einem der Ansprüche 13 bis 17 **dadurch gekennzeichnet, dass**
- die Ablage von Fasermaterial auf einem mehrteiligen Formwerkzeug erfolgt, wobei
- die Nut durch eine in axialer und radialer Richtung begrenzte Aussparung zwischen den einzelnen Formteilen (6, 7) sowie der Kontur von in dieser Aussparung befindlichen Kreissegmenten (10c, d) gebildet und
- die Breite, Höhe und Form der Nut durch axiale Verschiebung der Formteile (6, 7) zueinander sowie radiale Verschiebung der Kreissegmente (10c, d) einstellbar ist.

19. Verfahren nach einem der Ansprüche 13 bis 18 **dadurch gekennzeichnet, dass**
- die nach innen gerichtete Ausstülpung mindestens einer Faserlage, welche die eine Nut überspannt, an der sich radial nach innen verjüngenden Innenkontur der Kreissegmente (10c) vollständig anliegt und
- durch axiale Verschiebung der Formteile (6, 7) und durch radiale Verschiebung der Kreissegmente (10c) die Breite der Nut verkleinert und die Ausstülpung umgeformt wird.

20. Verfahren nach einem der Ansprüche 13 bis 19 **dadurch gekennzeichnet, dass** Einleger (12) im Bereich des Flansches (14) integrierbar sind.

21. Verfahren nach einem der Ansprüche 13 bis 20, **dadurch gekennzeichnet, dass**
- nach der der Umformung der Ausstülpungen und/oder
- nach der Einbettung von Einlegern (12) in die Ausstülpung
- ein oder mehrere Faserlagen auf dem Formwerkzeug (4) abgelegt werden,
- die keine nach innen gerichteten Ausstülpungen aufweisen.

22. Verfahren nach einem der Ansprüche 15 und 18, **dadurch gekennzeichnet, dass** die flanschbildenden Faserlagen im Bereich des Flansches im Bereich der Ausstülpung in annähernd radiale Richtung umgeformt werden.

## Claims

1. Rim well made of fiber composite with a flange located on the inner side of the rim well for fastening a wheel spider or a wheel disk, **characterized in that** the flange (14) is formed by inwardly directed protuberances of wound or braided fiber layers of the rim well (15), wherein the wound or braided fiber layers enter the flange from the rim well without interruption and the flank of the flange (14) is shaped as an ideally shaped counterpart to mounting elements located on the wheel disk or wheel spider.

2. Rim well made of fiber composite in accordance with claim 1, **characterized in that** the fiber layers enter and again exit the flange from the rim well without interruption and the lower end of the flange is formed by a reversal point of the fiber layers.

3. Rim well made of fiber composite in accordance with one of the claims 1 and 2, **characterized in that** the fiber layers pass through the entire rim well as well as the entire flange without interruption.

4. Rim well made of fiber composite in accordance with one of the above claims, **characterized in that** some of the fiber layers pass only partly through the rim well.

5. Rim well made of fiber composite in accordance with one of the above claims, **characterized in that** the fiber layers are formed from braided continuous filaments.

6. Rim well made of fiber composite in accordance with one of the above claims, **characterized in that** a layer of fiber layers of the rim well, which layer is located radially inside, consisting of at least one flange-forming fiber layer, comprises fibers entering the flange.

7. Rim well made of fiber composite in accordance with one of the above claims, **characterized in that** a layer of fiber layers of the rim well, which layer is located radially outside, consisting of at least one rim well-forming fiber layer, and/or textile patches applied additionally in the area of the protuberances have no fibers entering the flange.

8. Rim well made of fiber composite in accordance with one of the above claims, having at least two layers, which are arranged one on top of another in the radial direction of the rim well, wherein
- the fibers of the flange-forming fiber layers (9a) have an angle of ± 3° to ± 87°, preferably ± 15° to ± 65°, and more preferably ± 20° to ± 60° relative to the axial direction of the rim well, and
- the fibers of the rim well-forming fiber layers (9b) have a fiber angle of ± 3° to ± 87°, preferably ± 20° to ± 75° and more preferably ± 30° to ± 70° relative to the axial direction of the rim well.

9. Rim well made of fiber composite in accordance with one of the above claims, partly or entirely consisting of semifinished textile products with fiber orientations ranging from ±0° to ± 90° and preferably from ± 3° to ± 87° relative to the axial direction of the rim well.

10. Rim well made of fiber composite in accordance with one of the above claims, **characterized in that** the flange (14) is circumferential or is in the form of individual circle segments on the inner side of the rim well.

11. Rim well made of fiber composite in accordance with one of the above claims, **characterized in that** inlays in the form a broken ring or individual circle segments (12) are embedded in the protuberances of the flange (14).

12. Rim well made of fiber composite in accordance with one of the above claims, **characterized in that** the flange (14) has a rectangular geometry with straight flanks or a V-shaped geometry with oblique flanks as well as angular or rounded flanks.

13. Method for manufacturing a rim well in accordance with claim 1, **characterized in that**
- the deposition of fiber material is carried out by winding or braiding on a mold corresponding to the contour of the rim well with a circumferential or segmented radial groove,
- wherein the deposition is carried out such that the fibers of the fiber material of at least one fiber layer enter the groove,
- so that a fiber preform with at least one fiber layer with protuberances directed inwardly into the groove is formed,
- and this fiber preform is subsequently consolidated with a matrix material.

14. Method in accordance with claim 13, **characterized in that**
- - the deposition of fiber material is carried out on a multipart mold, wherein
- - the groove is formed by a recess defined in the axial and radial directions between the individual mold parts.

15. Method in accordance with one of the claims 13 through 14, **characterized in that**
- the width of the groove can be set by axial displacement of the mold parts (6, 7) in relation to one another.

16. Method in accordance with one of the claims 13 through 15, **characterized in that**
- the inwardly directed protuberance of at least one fiber layer spans over the groove in a wedge-shaped manner,
- is in contact with the inner contour thereof only partly,
and
- the width of the groove is reduced and the protuberance is deformed by axial displacement of the mold parts.

17. Method in accordance with one of the claims 13 through 16, **characterized in that**
- the inwardly directed protuberance of at least one fiber layer which spans over the groove, is fully in contact with the inner contour thereof tapering radially inwardly, and
- inlays (12) adapted to the inner contour in the form of a broken ring or individual circle segments are embedded in the protuberances of the fiber layers of the flange (14).

18. Method in accordance with one of the claims 13 through 17, **characterized in that**
- the deposition of fiber material is carried out on a multipart mold, wherein
- the groove is formed by a recess defined in the axial and radial directions between the individual mold parts (6, 7) as well as the contour of circle segments located in this recess, and
- the width, height and shape of the groove can be set by axial displacement of the mold parts (6, 7) in relation to one another as well as radial displacement of the circle segments.

19. Method in accordance with one of the claims 13 through 18, **characterized in that**
- the inwardly directed protuberance of at least one fiber layer which spans over the groove is fully in contact with the radially inwardly tapering inner contour of the circle segments (10c), and
- by axial displacement of the mold parts (6, 7) and by radial displacement of the circle segments (10c) the width of the groove is reduced and the protuberance is deformed.

20. Method in accordance with one of the claims 13 through 19, **characterized in that** inlays (12) can be integrated in the area of the flange (14).

21. Method in accordance with one of the claims 13 through 20, **characterized in that**
- one or more fiber layers,
- which have no inwardly directed protuberances, are deposited on the mold (4)
- after the deformation of the protuberance and/or
- after the embedding of inlays (12) in the protuberance.

22. Method in accordance with one of the claims 15 and 18, **characterized in that** the flange-forming fiber layers are deformed in the area of the flange in the area of the protuberance in an approximately radial direction.

## Revendications

1. Embase de jante en matière composite renforcées par des fibres comprenant un flasque situé du côté intérieur de l'embase de jante et destiné à la fixation d'une étoile de roue ou d'un disque de roue, **caractérisée en ce que** le flasque (14) est formé par des protubérances, dirigées vers l'intérieur, de couches de fibres tressées ou enroulées de l'embase de jante (15), les couches de fibres tressées ou enroulées s'étendant sans interruption depuis l'embase de jante (15) jusque dans le flasque (14) et le flanc du flasque (14) étant conçu sous la forme d'une pièce homologue de forme idéale par rapport des éléments de fixation se trouvant au niveau du disque de roue ou de l'étoile de roue.

2. Embase de jante en matière composite renforcées par des fibres selon la revendication 1, **caractérisée en ce que** les couches de fibres s'étendent sans interruption de l'embase de la jante (15) jusque dans le flasque (14) et en ressortent et l'extrémité inférieure du flasque (14) est formée par un point d'inversion des couches de fibres.

3. Embase de jante en matière composite renforcées par des fibres selon l'une des revendications 1 et 2, **caractérisée caractérisé en ce que** les couches de fibres recouvre la totalité de l'embase de jante (15) et du flasque (14) sans interruption.

4. Embase de jante en matière composite renforcée par des fibres selon l'une des revendications précédentes, **caractérisée en ce qu'**une partie des couches de fibres recouvre seulement partiellement l'embase de jante.

5. Embase de jante en matière composite renforcée par des fibres selon l'une des revendications précédentes, **caractérisée en ce que** les couches de fibres sont formées de fibres continues tressées.

6. Embase de jante en matière composite renforcée par des fibres selon l'une des revendications précédentes, **caractérisée en ce qu'**une couche radialement intérieure des couches de fibres (9a) de l'embase de jante, constituée d'au moins une couche de fibres formant un flasque, comporte des fibres s'étendant jusque dans le flasque.

7. Embase de jante en matière composite renforcée par des fibres selon l'une des revendications précédentes, **caractérisée en ce qu'**une couche radialement extérieure des couches de fibres (9b) de l'embase de jante, constituée d'au moins une couche de fibres formant l'embase de jante, et/ou de pièces textiles (17) appliquées en plus au niveau des protubérances ne comporte aucune fibre s'étendant jusque dans le flasque.

8. Embase de jante en matière composite renforcée par des fibres selon l'une des revendications précédentes, comprenant au moins deux couches qui sont disposées les uns au dessus des autres dans la direction radiale de l'embase de jante,
- les fibres des couches de fibres (9a) formant un flasque s'étendant avec un angle de fibre allant ± 3° à ± 87°, de préférence de ± 15° à ± 65° et plus préférablement de ± 20° à ± 60° par rapport à la direction axiale de l'embase de jante et
- les fibres des couches de fibres (9b) formant un flasque s'étendant avec un angle de fibre allant ± 3° à ± 87°, de préférence de ± 20° à ± 75° et plus préférablement de ± 30° à ± 70° par rapport à la direction axiale de l'embase de jante.

9. Embase de jante en matière composite renforcée par des fibres selon l'une des revendications précédentes, constituée entièrement ou partiellement de produits textiles semi-finis à orientation de fibres de ± 0° à ± 90°, de préférence ± 3° à ± 87° par rapport à la direction axiale de l'embase de jante.

10. Embase de jante en matière composite renforcée par des fibres selon l'une des revendications précédentes, **caractérisée en ce que** le flasque (14) est présent circonférentiellement ou sous forme de segments de cercle au niveau du côté intérieur de l'embase de jante.

11. Embase de jante en matière composite renforcée par des fibres selon l'une des revendications précédentes, **caractérisée en ce que** des inserts se présentant sous la forme d'une bague circulaire coupée ou de segments de cercle individuels (12) sont incorporés dans les protubérances des couches de fibres du flasque.

12. Embase en matière composite renforcée par des fibres selon l'une des revendications précédentes, **caractérisée en ce que** le flasque (14) a une géométrie rectangulaire pourvue de flancs droits ou une géométrie en forme de V pourvue de flancs inclinés ainsi que des angles droits ou arrondis.

13. Procédé de fabrication d'une embase de jante selon la revendication 1, **caractérisé en ce que**
- le dépôt de matière fibreuse est effectué par un processus de tressage ou d'enroulement sur un outil de formage (4), pourvu d'une rainure circonférentielle ou radiale segmentée, correspondant au contour de l'embase de jante (15),
- le dépôt est effectué de telle sorte que les fibres de la matière fibreuse d'au moins une couche de fibres s'étendent jusque dans la rainure,
- ainsi une préforme de fibres comportant au moins une couche de fibres est formée avec des protubérances dirigées vers l'intérieur jusque dans la rainure,
- et cette préforme de fibres est ensuite consolidée avec une matière matricielle.

14. Procédé selon la revendication 13, **caractérisée en ce que**
- le dépôt de matière fibreuse est effectué sur un outil de formage (4) à plusieurs éléments,
- la rainure étant formée par un évidement limité axialement et radialement entre les éléments de formage individuels.

15. Procédé selon l'une des revendications 13 à 14, **caractérisée en ce que**
- la largeur de la rainure peut être réglée par déplacement axial des éléments de formage (6, 7) l'un par rapport à l'autre.

16. Procédé selon l'une des revendications 13 à 15, **caractérisée en ce que**
- la protubérance, dirigée vers l'intérieur, d'au moins une couche de fibres s'étend en forme de coin par-dessus la rainure,
- ne vient que partiellement en appui sur le contour intérieur de celle-ci et
- la largeur de la rainure est réduite, et la protubérance est mise en forme, par déplacement axial des éléments de formage (6, 7).

17. Procédé selon l'une des revendications 13 à 16, **caractérisé en ce que**
- la protubérance, dirigée vers l'intérieur, d'au moins une couche de fibres qui s'étend par-dessus la rainure, vient totalement en appui sur le contour intérieur, diminuant radialement vers l'intérieur, de celle-ci et
- l'insert (12), adapté au contour intérieur, se présentant sous la forme d'une bague circulaire coupée ou de segments de cercle individuels, est incorporé dans les protubérances des couches de fibres du flasque (14).

18. Procédé selon l'une des revendications 13 à 17, **caractérisée en ce que**
- le dépôt de matière fibreuse est effectué sur un outil de formage constitué de plusieurs éléments,
- la rainure étant formée par un évidement limité axialement et radialement entre les éléments de formage individuels (6, 7) et le contour de segments de cercle (10c, d) se trouvant dans cet évidement et
- la largeur, la hauteur et la forme de la rainure pouvant être réglés par déplacement axial des éléments de formage (6, 7) les uns par rapport aux autres ainsi que par déplacement radial des segments de cercle (10c, d).

19. Procédé selon l'une des revendications 13 à 18, **caractérisée en ce que**
- la protubérance, dirigée vers l'intérieur, d'au moins une couche de fibres, qui s'étend par-dessus la rainure, vient entièrement en appui sur le contour intérieur, diminuant radialement vers l'intérieur des segments de cercle (10c) et
- la largeur de la rainure est réduite, et la protubérance est mise en forme, par déplacement axial des éléments de formage (6, 7) et par déplacement radial des segments de cercle (10c).

20. Procédé selon l'une des revendications 13 à 19, **caractérisé en ce que** des inserts (12) peuvent incorporés dans la zone du flasque (14).

21. Procédé selon l'une des revendications 13 à 20, **caractérisée en ce que**,
- après la mise en forme des protubérances et/ou
- après l'incorporation des inserts (12) dans la protubérance,
- au moins une couche de fibres est déposée sur l'outil de formage (4),
- laquelle ne comporte pas de protubérances dirigées vers l'intérieur.

22. Procédé selon l'une des revendications 15 et 18, **caractérisée en ce que** les couches de fibres, formant un flasque, sont mises en forme dans la zone du flasque dans la zone de la protubérance approximativement dans la direction radiale.
